Europäisches Patentamt

European Patent Office

Office européen des brevets

(19)

(11) EP 0 477 616 B1

(12) **EUROPÄISCHE PATENTSCHRIFT**

(45) Veröffentlichungstag und Bekanntmachung des Hinweises auf die Patenterteilung:
**23.04.1997 Patentblatt 1997/17**

(51) Int Cl.⁶: **H04N 7/36**, G06T 7/20

(21) Anmeldenummer: **91114982.1**

(22) Anmeldetag: **05.09.1991**

(54) **Verfahren zur Schätzung von Bewegung in einem aufgenommenen Bild**

Method for estimation of motion in a captured image

Procédé d'estimation de mouvement dans une image captée

(84) Benannte Vertragsstaaten:
**AT DE FR GB IT SE**

(30) Priorität: **28.09.1990 DE 4030703**

(43) Veröffentlichungstag der Anmeldung:
**01.04.1992 Patentblatt 1992/14**

(73) Patentinhaber: **ROBERT BOSCH GMBH**
**70442 Stuttgart (DE)**

(72) Erfinder: **Stiller, Christoph**
**W-5100 Aachen (DE)**

(74) Vertreter: **Friedmann, Jürgen, Dr.-Ing. et al**
**c/o Robert Bosch GmbH,**
**Postfach 30 02 20**
**70442 Stuttgart (DE)**

(56) Entgegenhaltungen:
**EP-A- 0 395 273**

- **PROCEEDINGS OF THE INTERNATIONAL CONFERENCE ON ACOUSTICS, SPEECH AND SIGNAL PROCESSING, 23-26 MAY 1989 ;GLASGOW, SCOTLAND ; IEEE PRESS ;NEW YORK (US) Seiten 1651 - 1654 , XP89187 P BOUTHEMY AND P. LALANDE 'MOTION DETECTION IN AN IMAGE SEQUENCE USING GIBBS DISTRIBUTIONS'**
- **ELECTRONICS LETTERS Bd. 26, Nr. 5, März 1990, ENAGE GB Seiten 276 - 277 , XP105589 C.H.HSIEH ET AL. 'motion estimation algorithm using interblock correlation'**

**Beschreibung**

Die Erfindung geht aus von einem Verfahren nach der Gattung des Hauptanspruchs.

Zur Übertragung von bewegten Bildern, beispielsweise beim Schmalband-Bildtelefon, sind verschiedene datenreduzierende Codierverfahren bekanntgeworden. Eine wesentliche Datenreduzierung wird durch eine DPCM in der Zeitebene erzielt. Zu einer ausreichenden Wirksamkeit dieser DPCM ist es erforderlich, daß beim Auslesen der Daten aus dem für die DPCM erforderlichen Prädiktionsspeicher eine im Bild stattgefundene Bewegung berücksichtigt wird. Dabei wird für jeweils eine Gruppe von Bildelementen (Block) ein Bewegungsvektor ermittelt, welcher der Größe und Richtung der Bewegung dieses Blocks im Verhältnis zu einem vergleichbaren Block des vorangegangenen Bildes im wesentlichen entspricht.

Aus der EP-A-0 395 273, die für die Vertragsstaaten DE, FR, GB als Stand der Technik im Sinne von Art. 54(3) EPÜ gilt,ist ein Verfahren zur Schätzung von Bewegung in einem aufgenommenen Bild bekannt. Für jeweils einen Block des aufgenommenen Bildes wird dort ein Bewegungsvektor ermittelt, der die Bewegung innerhalb des Blocks von einem zu einem folgenden Bild darstellt. Diese Bewegungsvektoren werden für jeweils einen Block unabhängig voneinander ermittelt. Für Bildpunkte der Blöcke werden ebenfalls Bewegungsvektoren ermittelt. Um fehlerhafte Bewegungsvektoren an Punktsingularitäten zu unterdrücken, werden an diesen Bildpunkten die ermittelten fehlerhaften Bewegungsvektoren durch Bewegungsvektoren benachbarter Bildpunkte ersetzt.

Zur Ermittlung des Bewegungsvektors werden die Signale der Bildelemente eines Blocks mit Signalen der Bildelemente des entsprechenden Blocks eines vorangegangenen Bildes unter Berücksichtigung von Verschiebungen, die durch Bewegungen im Bild verursacht sind, verglichen. Dabei wird jeweils eine Summe der Abweichungen gebildet, wobei das Vorzeichen der Abweichungen durch Absolutwertbildung oder Quadrierung unberücksichtigt bleibt. Diejenige Verschiebung, für welche die kleinste Summe gebildet wurde, wird als Bewegungsvektor angenommen. Ein derartiges Verfahren und eine Anordnung zur Durchführung des Verfahrens sind beispielsweise in der Patentanmeldung DE-A-38 34 477 der Anmelderin beschrieben.

Bei diesen bekannten Verfahren ergeben sich jedoch verschiedene Fehlermöglichkeiten. So wird beispielsweise die Summe der Abweichungen zu null, wenn die Signale der Bildelemente des auszuwertenden Blocks gleich groß sind, wenn also im Bild eine homogene Fläche vorliegt. Außerdem kann ein Minimum bei einer "falschen" Verschiebung durch Rauschen ermittelt werden, das dem Nutzsignal überlagert ist. Da kleine Blöcke seltener Stellen mit markantem Helligkeitsverlauf aufweisen als große Blöcke, nimmt ferner die Zuverlässigkeit der Bewegungsvektoren mit abnehmender Blockgröße ebenfalls ab.

Bei den bekannten Verfahren werden zur Minimierung des Rechenaufwandes nicht die Summen der Abweichungen für alle möglichen Verschiebungen eines Blocks ermittelt und danach das Minimum gebildet, sondern es wird nach einer Suchstrategie verfahren. Dazu wird zunächst die Summe der Abweichungen für größere Verschiebungen in verschiedenen Richtungen ermittelt. Nach diesem ersten Suchschritt wird von derjenigen Verschiebung mit der kleinsten Abweichung ausgehend ein weiterer Suchschritt durchgeführt. In der Literatur wurden dazu Strategien mit drei oder vier Suchschritten vorgeschlagen. Durch die damit verbundene nicht vollständige Prüfung aller Verschiebungen ergeben sich weitere Unsicherheiten bei der Bestimmung des Bewegungsvektors.

Aufgabe der vorliegenden Erfindung ist es, ein Verfahren zur Schätzung von Bewegung anzugeben, bei welchem unter Vermeidung der obengenannten Fehler Bewegungsvektoren ermittelt werden, die weitgehend der im Bild jeweils vorliegenden physikalischen Bewegung entsprechen. Ferner soll eine möglichst günstige Codierung der ermittelten Bewegungsvektoren erfolgen.

Das Verfahren mit den kennzeichnenden Merkmalen des Hauptanspruchs hat den den Vorteil, daß die Bewegungsvektoren genauer ermittelt werden. Dabei wird in geschickter Weise die meist vorliegende Korrelation der physikalischen Bewegung in benachbarten Blöcken ausgenutzt.

Eine besonders günstige datenreduzierende Codierung wird gemäß einer Weiterbildung der Erfindung dadurch erreicht, daß zur Codierung des blockorientierten Bewegungsvektorfeldes das Vektorfeld in Bereiche, die ausschließlich den Nullvektor enthalten und solche, die von Null verschiedene Vektoren enthalten, unterteilt wird, daß die Kontur der Bereiche, die den Nullvektor nicht enthalten, codiert wird und daß in Bereichen, die von Null verschiedene Vektoren enthalten, die Differenz zwischen dem ermittelten und einem aus den bereits codierten Bewegungsvektoren der räumlichen Nachbarschaft prädiziertem Bewegungsvektor übertragen wird.

Durch die in weiteren Unteransprüchen aufgeführten Maßnahmen sind weitere vorteilhafte Weiterbildungen und Verbesserungen der im Hauptanspruch angegebenen Erfindung möglich.

Ausführungsbeispiele der Erfindung sind in der Zeichnung anhand mehrerer Figuren dargestellt und in der nachfolgenden Beschreibung näher erläutert. Es zeigt:

Fig. 1    ein stark vereinfachtes Blockdiagramm des erfindungsgemäßen Verfahrens,

Fig. 2    ein Blockschaltbild eines bekannten DPCM-Coders,

Fig. 3      eine schematische Darstellung zur Erläuterung einer an sich bekannten Suchstrategie zur Ermittlung eines Bewegungsvektors,

Fig. 4      nicht in der Beschreibung dargestellte Gleichungen zur Erläuterung des erfindungsgemäßen Verfahrens und

Fig. 5      ein Flußdiagramm für ein Programm eines Signalprozessors, der zur Durchführung des erfindungsgemäßen Verfahrens verwendet wird.

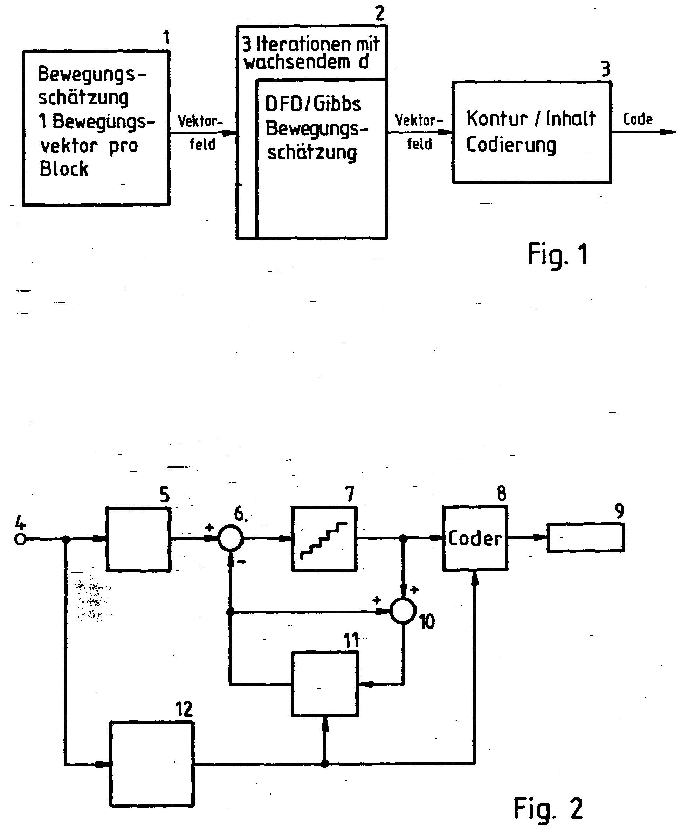

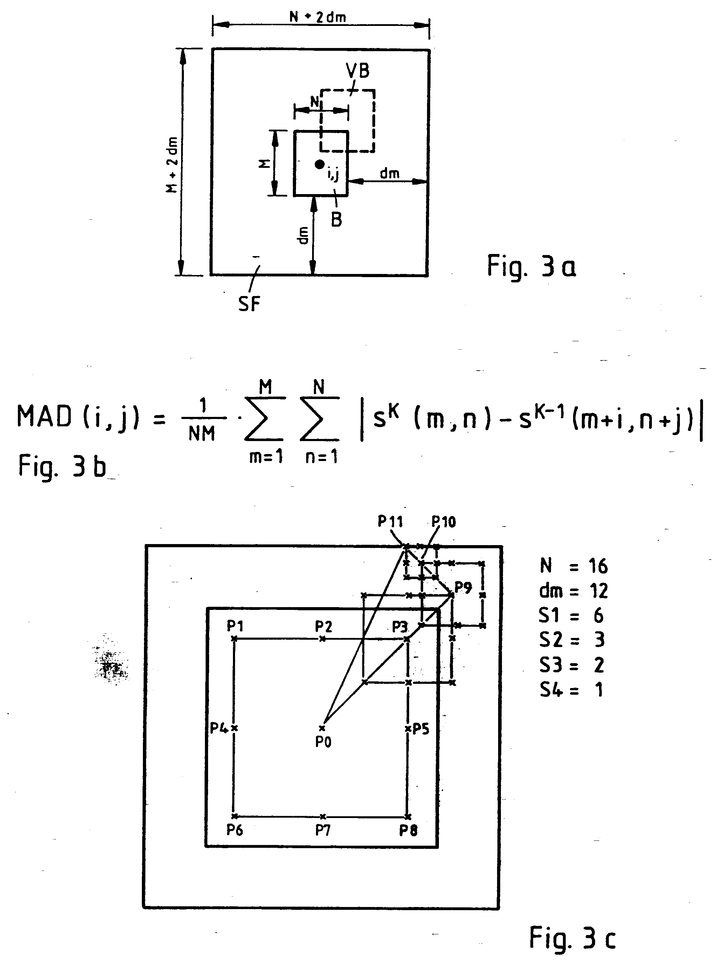

Bei dem in Fig. 1 dargestellten Verfahren erfolgt bei 1 zunächst eine hierarchische Bewegungsschätzung nach einem bekannten Verfahren. Eines dieser bekannten Verfahren wird im Zusammenhang mit Fig. 3 später genauer erläutert. Der Verfahrensschritt 1 wird jeweils für einen Block von beispielsweise 16 x 16 Bildelementen durchgeführt. Als Ergebnis entsteht ein Vektorfeld von beispielsweise 22 x 18 Vektoren.

In einem zweiten Verfahrensschritt 2 werden die Bewegungsvektoren dieses Vektorfeldes unter Berücksichtigung einer Korrelation zwischen Bewegungen in benachbarten Blöcken korrigiert. Dabei wird ein später noch genau zu erläuterndes Gütekriterium für mehrere Werte des Bewegungsvektors jeweils eines Blocks berechnet und derjenige Wert für einen folgenden Durchgang gespeichert, bei welchem das Gütekriterium am besten zutrifft. Nach beispielsweise drei Durchgängen werden die korrigierten Bewegungsvektoren als korrigiertes Vektorfeld ausgegeben und in einem dritten Verfahrensschritt 3 einer datenreduzierenden Codierung zugeführt.

Die Codierung erfolgt nach einem prädiktiven Verfahren derart, daß die Konturen derjenigen Bereiche, in welchem die Bewegungsvektoren ungleich 0 sind, mit einem Konturverfolgungsverfahren codiert werden, wie es beispielsweise in U. Franke: "Regionenorientierte Bildbeschreibung - Algorithmen und Möglichkeiten" VDI Fortschrittberichte, Reihe 10, Nr. 101, Kapitel 3 beschrieben ist. Die Übertragung der Bewegungsvektoren erfolgt als Differenz zwischen dem ermittelten Bewegungsvektor und einem aus den bereits codierten Bewegungsvektoren der räumlichen Nachbarschaft prädizierten Bewegungsvektor (Prädiktor).

Der hierfür verwendete örtliche Prädiktor prädiziert einen Vektor v aus seinem linken Nachbar a, links/oberen Nachbar b, oberen Nachbar c und rechts/oberen Nachbar d zu $v = (4a+b+2c+d)/8$ . Nullvektoren werden dabei nicht berücksichtigt, sondern durch den Mittelwert der übrigen Vektoren ersetzt. Falls a, b, c und d gleichzeitig Nullvektoren sind, wird der Vektor des zeitlich vorhergehenden Vektorfeldes unabhängig davon, ob es ebenfalls ein Nullvektor ist, als Prädiktionsvektor verwendet. Die Erfindung ist nicht auf die an sich vorteilhafte Zahl von vier benachbarten Vektoren beschränkt. Bei Vorliegen entsprechender Voraussetzungen kann der Prädiktor auch anders abgeleitet werden.

Zur Erleichterung des Verständnisses der Erfindung wird im folgenden anhand von Fig. 2 ein Beispiel eines einfachen DPCM-Coders erläutert. Die bereits in digitaler Form vorliegenden Videosignale werden über einen Eingang 4 und einen Bildspeicher 5 einer Subtraktionsschaltung 6 zugeführt. Der Ausgang der Subtraktionsschaltung 6 ist über einen Quantisierer 7 mit einem Coder 8 verbunden, von dessen Ausgang die codierten Daten einem Übertragungskanal 9 zugeführt werden. Die quantisierten Signale werden über eine Addierschaltung 10 einem Prädiktionsspeicher 11 zugeführt, dessen Ausgang mit der Subtraktionsschaltung 6 und der Addierschaltung 10 verbunden ist.

Die Menge der zur Übertragung kommenden Daten ist umso kleiner, je besser das im Prädiktionsspeicher 11 gespeicherte Bild dem jeweils zu übertragenden Bild entspricht. In diesem Sinne ist eine Berücksichtigung von im Bild vorliegenden Bewegungen beim Auslesen der Daten aus dem Prädiktionsspeicher 11 erforderlich. Dazu werden die dem Eingang 4 zugeführten digitalen Videosignale einem Bewegungsschätzer 12 zugeführt, der jeweils für einen Teil des Bildes (Block) einen Bewegungsvektor ermittelt. Die Bewegungsvektoren werden dem Prädiktionsspeicher 11 zugeführt und gemeinsam mit den codierten Bilddaten über den Übertragungskanal 9 übertragen, um bei der Decodierung berücksichtigt zu werden.

Die Figuren 3a) und 3b) zeigen die Ermittlung eines Bewegungsvektors für einen Block nach einem bekannten Verfahren. Das kleinere Rechteck in Fig. 3a) stellt einen jeweils zu codierenden Block B im k-ten Bild dar. Der Block B besteht aus M x N Bildelementen. Bei einem praktisch ausgeführten Beispiel sind M und N jeweils 16. Zum Vergleich der Position dieses Blocks mit einem vergleichbaren Block (Vergleichsblock VB) des vorangegangenen, (k-1)-ten Bildes wird aus dem Bildspeicher 5 (Fig. 2) ein Suchfeld SF ausgelesen, das in beiden Richtungen um eine Anzahl dm Bildelemente größer ist als ein Block. Diese Anzahl ergibt sich aus der größten Bewegung zwischen zwei aufeinanderfolgenden Bildern, welche noch erfaßt werden soll. Das Suchfeld SF weist demnach Abmessungen von N+2dm und M+2dm auf. Bei der in Fig. 3a) dargestellten mittleren Lage des Blocks B im Suchfeld SF wird der Block mit dem Vergleichsblock VB des vorangegangenen Bildes verglichen. Die Koordinaten i, j stellen Abweichungen von dieser Position dar.

Als Maß für die Abweichung zwischen zwei zu vergleichenden Blöcken bzw. zwischen dem Block des aktuellen Bildes und einem entsprechenden Teil des Suchfeldes wird der Mittelwert der absoluten Bilddifferenz (MAD) verwendet. Dieser folgt der Gleichung, welche in Fig. 3b) dargestellt ist. m und n sind jeweils die Koordinaten der Bildelemente innerhalb eines Blocks B, s bedeutet das zu dem Bildelement gehörende Signal, wobei die Hochzahl k auf das k-te Bild und die Hochzahl k-1 auf das vorangegangene Bild hinweist.

Der Wert für MAD wird jeweils für verschiedene Positionen des Blocks innerhalb des Suchfeldes SF gebildet. Aus einem Minimum dieses Wertes wird geschlossen, daß sich der Block B des k-ten Bildes im (k-1)-ten Bild an der entsprechenden Stelle des Suchfeldes befunden hat, also von dieser Stelle zu der Position des Blocks im k-ten Bild bewegt wurde.

Zur Ermittlung dieses Minimums sind verschiedene schrittweise Suchmethoden möglich, wovon eine - nämlich eine Vier-Schritt-Methode - in Fig. 3c) schematisch dargestellt ist. In einem ersten Schritt wird der Wert MAD für den Mittelpunkt P0, was keiner Bewegung entsprechen würde, und für die auf einem Rechteck um den Punkt P0 liegenden Punkte P1 bis P8 errechnet. Bei dem in Fig. 3c) dargestellten Beispiel ergibt die durch den Punkt P3 gekennzeichnete Position des Blocks den geringsten Wert MAD gegenüber den Punkten P0 bis P2 und P4 bis P8. Deshalb werden, ausgehend von Punkt P3, weitere Werte für MAD bei Punkten ermittelt, welche horizontal, vertikal und in beiden Richtungen um einen Abstand von drei Bildpunkten von P3 entfernt sind. Dieser Schritt ergibt ein Minimum von MAD beim Punkt P9, von welchem ausgehend der dritte Schritt eine Ermittlung von MAD bei Punkten beinhaltet, die jeweils um zwei Bildpunkte entfernt sind.

Bei Punkt P10 ergibt sich wiederum ein Minimum, worauf die benachbarten Punkte zur weiteren Suche verwendet werden. Wird dann beispielsweise bei P11 ein Minimum gefunden, so stellt P0P11 den ermittelten bzw. geschätzten Bewegungsvektor v dar.

Anstelle des Mittelwertes der absoluten Differenzen (MAD) können auch andere Kriterien verwendet werden. So kann beispielsweise ein Bewegungsvektor durch Berechnung des Minimums der Summe der quadratischen Fehler (DFD, displaced frame difference) ermittelt werden. Dabei gilt:

$$DFD = \sum_{i=1}^{N} d^2(i, v(i))$$

mit

N = Anzahl der Bildelemente eines Blocks,
i = das i-te Bildelement und
v(i) = der Verschiebungsvektor des i-ten Bildelementes.

Auf die bei den bekannten Verfahren vorhandenen Fehlermöglichkeiten wurde bereits hingewiesen. Bei dem erfindungsgemäßen Verfahren wird davon ausgegangen, daß benachbarte Bewegungsvektoren häufig zum selben Objekt gehören und daher korreliert sind. Dieses wird sowohl bei der Korrektur der zunächst ermittelten Bewegungsvektoren als auch bei der Codierung des Bewegungsvektorfeldes ausgenutzt. Als Gütekriterium für die Bewegungsvektoren wird dementsprechend nicht mehr die MAD bzw. DFD minimiert, sondern die Wahrscheinlichkeit dafür maximiert, daß der untersuchte Vektor die physikalische Bewegung beschreibt.

Um die Wahrscheinlichkeit formelmäßig zu erfassen, werden ein Verschiebungsmodell, welches die Einflüsse der Verschiebung modelliert, und ein Vektorfeldmodell, welches die Wechselwirkung zwischen Vektoren im selben Vektorfeld modelliert, eingeführt. Mit Hilfe der beiden Modelle wird die bedingte Wahrscheinlichkeitsdichte

$$p(V|A,B) \rightarrow Max \tag{1}$$

des Vektorfeldes V bei gegebenen Bildern A und B maximiert. Nach dem Satz von Bayes gilt dann:

$$p(A,B,V) = p(V|A,B) \cdot p(A,B) = p(A,B|V) \cdot p(V), \tag{2}$$

womit bei festen Bildern A und B die Forderung (1) äquivalent zu

$$p(A,B|V) \cdot p(V) \rightarrow Max \tag{3}$$

wird.

Die Wahrscheinlichkeitsdichte p(A,B|V), daß die Bilder A und B bei gegebenem Verschiebungsvektorfeld V auftreten, wird wie folgt modelliert:

4

- p(A,BIV) ist nur von den Amplituden des Prädiktionsfehlerbildes abhängig,
- die Amplituden des Prädiktionsfehlerbildes sind frequenzunabhängig mittelwertfrei Gauß-verteilt.

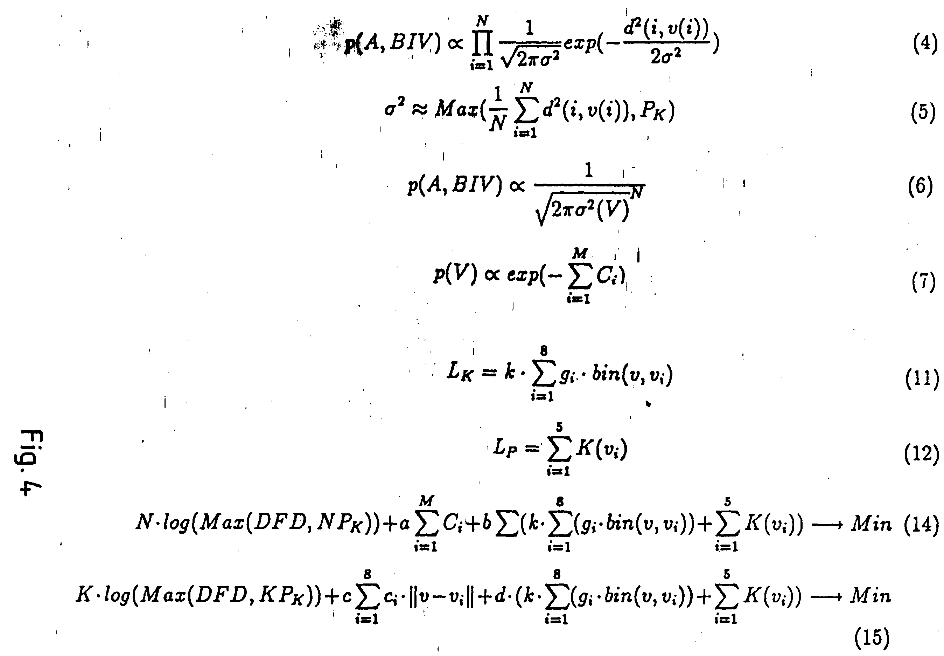

Damit gilt die in Fig. 4 wiedergegebene Gleichung (4) für aus N Bildpunkten bestehende Bilder, wobei $d(i,v(i))$ die Amplitude des i-Bildelementes des Restfehlerbildes ist, wenn für diesen Bildpunkt der Verschiebungsvektor $v(i)$ gilt. Die Varianz $\sigma^2$ kann als Summe der Leistung des Kamerarauschens $P_K$ und des Rauschens durch nicht perfekte Bewegungskompensierbarkeit der Sequenz angesehen werden und kann dann mit einem auf $P_K$ begrenzten Schätzer entsprechend Gleichung (5) gemäß Fig. 4 geschätzt werden. Damit ergibt sich für kleine Rauschleistungen $P_K$ Gleichung (6).

Gleichung (6) besagt, daß die Wahrscheinlichkeitsdichte dafür, daß A, B durch V ineinander übergehen, durch Minimierung der DFD maximiert werden kann. Der Umkehrschluß, daß bei gegebenen A, B das wahrscheinlichste Vektorfeld V ebenfalls durch Minimierung der DFD gefunden werden kann, ist jedoch nicht ohne weiteres zulässig.

Für das Bewegungsvektorfeld werden zwei verschiedene Modelle verwendet, die beide in das Matchkriterium einfließen. Zunächst wird die aus der Wechselwirkungstheorie stammende und in der Bildsegmentierung bereits erfolgreich eingesetzte Gibbs-Verteilung verwendet. Da ein Verschiebungsvektorfeld als aus verschiedenen quasistationären Verschiebungsfeldregionen zusammengesetzt aufgefaßt werden kann, ist ein in der Segmentierung erprobtes Modell anwendbar. Nach H. Derin und W. S. Cohle: "Segmentation of textured images using Gibbs random fields", Computer Vision, Graphics and Image Processing 35, pp. 72-98, 1986 wird die Gibbs-Verteilung durch Gleichung (7) beschrieben, wobei M die Anzahl der Cliquen und $C_i$ das i-te Cliquen-Potential bezeichnet. Wählt man ein Achternachbarschaftssystem, so können die Potentiale der Zweier-Cliquen mit den Vektoren $v_1$ und $v_2$ zu

$$C = c \cdot |V_1 - V_2| \tag{8}$$

für horizontale/vertikale Nachbarn und zu

$$C = c \cdot 2^{-\frac{1}{2}} \cdot |V_1 - V_2| \tag{9}$$

für diagonale Nachbarn mit einem reellen positiven Parameter c in Anlehnung an die Wechselwirkungstheorie beschrieben werden. Alle anderen Cliquen erhalten ein konstantes Potential, welches zur Maximierung der Wahrscheinlichkeitsdichte gemäß Gleichung (3) nicht von Interesse ist. Durch die so bestimmte Gibbs-Verteilung werden glatte Vektorfelder bevorzugt, ohne Bewegungskanten zu verschleifen.

Als zweites Vektorfeldmodell wird die Codelänge L eines Entrophie-Codes

$$L = -\mathrm{ld}(P(V)) \text{ bzw. } P(V) = \exp(-L \cdot \ln 2) \tag{10}$$

herangezogen. Auf diesem Wege ergibt sich eine Gibbs-Verteilung, wie sie oben vorausgesetzt wurde. Der Vergleich von Gleichung (10) mit Gleichung (7) läßt den Schluß zu, die Gibbs-Cliquen-Potentiale durch die Codelänge L zu modellieren. Entsprechend der Vektorfeldcodierung getrennt nach Kontur und Prädiktionsfehler, lassen sich die Kosten eines einzelnen Bewegungsvektors aus seiner Nachbarschaft lokal approximieren.

Dabei werden die Konturkosten durch den Ausdruck (11) gemäß Fig. 4 approximiert, wobei k ein konstanter Faktor ist. $v_i$ bezeichnet die acht nächsten Nachbarvektoren des betrachteten Vektors v und $\mathrm{bin}(v, v_i)$ erhält den Wert 0, falls v und $v_i$ gleichermaßen Nullvektoren bzw. keine Nullvektoren sind und den Wert 1, falls nur genau einer der beiden Vektoren ein Nullvektor ist, also falls zwischen beiden Vektoren eine Kontur verläuft. $g_i$ bezeichnet ein Gewicht, welches fur Vierernachbarn von v zu 1 und für diagonale Nachbarn zu $1/2^{\frac{1}{2}}$ gesetzt wird.

Durch einen einzelnen Bewegungsvektor werden bis zu fünf Prädiktionsfehlervektoren geändert. Die Prädiktionskosten eines Vektors sind demnach die Summe der Kosten $K(v_i)$ (Codelänge in Bit) dieser fünf Vektoren gemäß Gleichung (12). Die Gesamtkosten ergeben sich damit zu

$$L = L_K + L_P \tag{13}$$

in der Einheit [Bit].

Das resultierende Vektorgütekriterium ergibt sich nach Einsetzen der Ausdrücke (6), (7) und (13) in (3) und Umformen als zu Gleichung (1) äquivalente Forderung (14), wobei k, a und b positive Konstanten bezeichnen und die mit b gewichtete Summe über alle Vektoren des Vektorfeldes läuft.

Die resultierende Bewegungsschätzerstruktur ist in Fig. 1 skizziert. Zunächst wird durch eine schnelle Suche, beispielsweise ein Dreischrittverfahren, eine grobe Schätzung des Vektorfeldes erstellt. Da das Vektorfeld nur eine begrenzte Anzahl von Vektoren, beispielsweise 22 x 18 Vektoren, enthält, ist eine blockweise Minimierung vorteilhaft. Damit vereinfacht sich die Forderung (14) für einen Block mit K Bildelementen zu Forderung (15). Mit $c_i$ = konst. für $v_i$ ist Vierernachbar von v und $c_i$ = konst./$2^{1/2}$ für diagonale Nachbarn von v. c und d sind Konstanten.

Um den Rechenaufwand gering zu halten, wird die Forderung (15) bei dem Ausführungsbeispiel nicht für alle möglichen Vektoren, sondern nur jeweils für folgende 18 "Vektorkandidaten" getestet:

- den geschätzten Vektor des letzten Suchdurchgangs,
- die vier davon nur um ½ Bildelement abweichenden Vektoren,
- die Vektoren der acht benachbarten Blöcke,
- die vier Vektoren, die nachfolgender Prädiktor zur Codierung der Vektoren prädizieren würde, wenn er in einer der vier Bildecken beginnen würde,
- den Mittelwert der Vektoren der acht benachbarten Blöcke, wobei die Vektoren der diagonal benachbarten Blöcke mit $1/2^{1/2}$ bewertet werden.

Die vier vom geschätzten Vektor des letzten Suchdurchgangs nur um ½ Bildelement abweichenden Vektoren setzen eine Schätzung mit Sub-Bildelement-Auflösung voraus, d. h. zwischen je zwei Bildelementen des zeitlich früheren Bildes wird zunächst ein weiteres Bildelement interpoliert (horizontal und vertikal), so daß das Bild mit vier-facher Anzahl von Bildelementen vorliegt. Danach ist es möglich, den betrachteten Block um halbe Bildelemente (genauer: den halben Abstand zweier Bildelemente der ursprünglichen Auflösung) zu verschieben.

Ist beispielsweise der Vektor des letzten Suchdurchgangs v = (1.0, 2.5), betragen die davon um ½ Bildelement abweichenden Vektoren (0.5, 2.5), (1.5, 2.5), (1.0, 2.0) und (1.0, 3.0).

Die vier Vektoren, die der nachfolgende Prädiktor prädizieren würde, wenn er in einer der vier Bildecken beginnen würde, werden am folgenden Beispiel erläutert: Die Vektoren eines 3 x 3 Vektorblocks seien zeilenweise mit a, b ... i bezeichnet, wobei e den mittleren Vektor, der prädiziert werden soll, darstellt. Dann wird ein in der oberen linken Bildecke beginnender Prädiktor e zu (a+2b+c+4d)/8 prädizieren. Ein in der unteren linken Bildecke beginnender Prädiktor würde e hingegen zu (g+2h+i+4d)/8 prädizieren, usw..

Die 18 Vektorkandidaten stellen eine günstige Auswahl dar, die als Kompromiß zwischen erforderlicher Rechenleistung und Qualität des Vektorfeldes anzusehen ist. Das Hinzufügen weiterer Kandidaten würde den Rechenaufwand aber auch die Qualität des Vektorfeldes erhöhen. Das Wegnehmen einzelner Kandidaten würde entsprechend den Rechenaufwand und die Qualität des Vektorfeldes vermindern. Je nach Voraussetzungen im einzelnen kann der Fachmann jedoch mehr oder weniger Vektorkandidaten vorsehen.

Je nach Voraussetzungen im einzelnen kann in drei bis vier Durchgängen eine wesentliche Verbesserung des Vektorfeldes durchgeführt werden. Da die Forderung (15) eine schlechte Konvergenz für große d aufweist, wird die Iteration mit kleinem d begonnen und mit wachsendem d fortgesetzt. In einem oder mehreren Durchgängen können c oder k zu Null gesetzt werden.

Bei verschiedenen bekannten datenreduzierenden Codern werden Parameter der Codierung in Abhängigkeit des jeweils anfallenden Datenflusses gesteuert. Eine derartige Steuerung kann bei dem erfindungsgemäßen Verfahren die Konstante d beeinflussen und damit die Datenflußaufteilung zwischen Bewegungsschätzung und Up-date steuern.

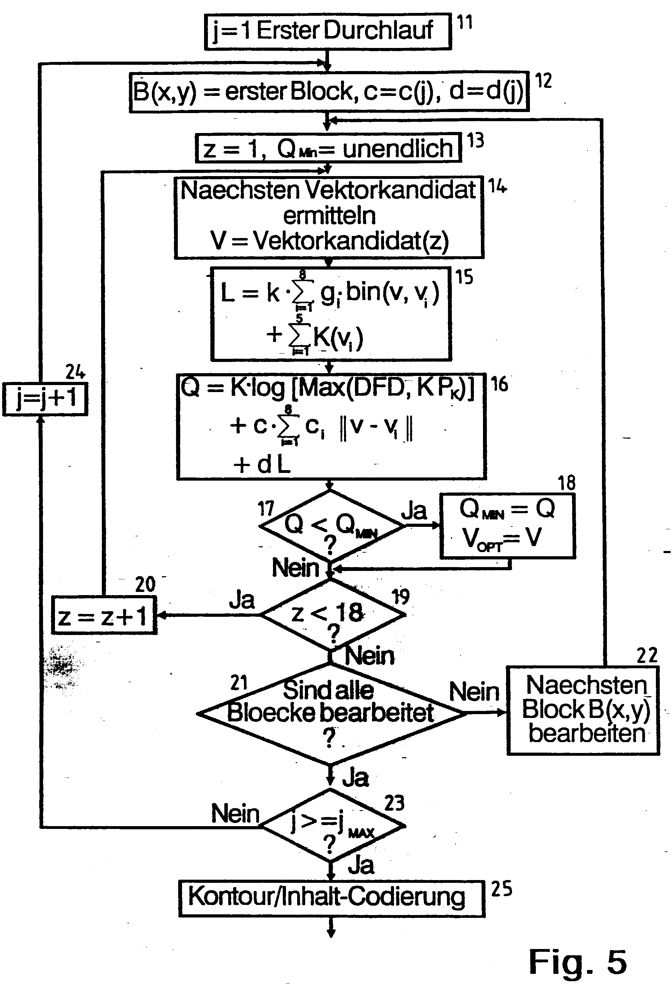

Fig. 5 zeigt ein Flußdiagramm zur Darstellung der Optimierung gemäß Funktionsblock 2 (Fig. 1). Zunächst wird bei 11 ein Zähler j = 1 für die Anzahl der Durchläufe gesetzt. Im Programmteil 12 wird ein erster Block mit den Koordinaten x, y definiert. Ferner werden die Konstanten c und d auf die für den ersten Durchlauf vorgegebenen Werte gesetzt. Daraufhin wird bei 13 ein Zähler für die jeweils für einen Vektor in die Gleichung (15) einzusetzenden Kandidaten auf 1 und $Q_{Min}$ auf den größten möglichen Wert ("unendlich") gesetzt.

Im Programmteil 14 wird der nächste Vektorkandidat bzw. beim ersten Durchlauf der erste Vektorkandidat ermittelt. In den Programmteilen 15 und 16 wird durch Anwendung von Gleichung (15) der Wert Q berechnet. Danach verzweigt sich das Programm bei 17 in Abhängigkeit davon, ob Q kleiner als $Q_{Min}$ ist. Ist dieses der Fall, wird $Q_{Min}$ = Q und $V_{OPT}$ = V gesetzt. Letzteres bedeutet, daß derjenige Vektorkandidat, mit welchem soeben Q berechnet wurde, bis auf weiteres als optimaler Vektor angesehen wird.

Danach verzweigt sich bei 19 das Programm in Abhängigkeit davon, ob z noch kleiner als 18 ist, nämlich der Anzahl der Vektorkandidaten. Ist z noch kleiner als 18, so wird z bei 20 inkrementiert und die Berechnung von Q mit dem folgenden Vektorkandidaten durchgeführt. Je nachdem, ob Q noch kleiner als $Q_{Min}$ ist, werden $Q_{Min}$ und $V_{OPT}$ durch neue Werte ersetzt oder nicht.

Ist schließlich Q für alle Vektorkandidaten berechnet worden, so wird in einer weiteren Verzweigung 21 festgestellt, ob bereits alle Blöcke verarbeitet sind. Ist dieses nicht der Fall, wird bei 22 der nächste Block festgestellt (durch eine entsprechende Inkrementierung von x bzw. y) und das Programm für den neuen Block durchlaufen. Sind jedoch nach der Verzweigung 21 alle Blöcke bearbeitet, wird bei 23 gefragt, ob $j \geq j_{Max}$ ist. Ist dieses nicht der Fall, wird j bei 24 inkrementiert, so daß, beginnend mit dem ersten Block, ein neuer Durchlauf der Optimierung erfolgt. Ist bei der Verzweigung 23 die vorgesehene Anzahl $j_{Max}$ von Durchläufen erreicht, wird das Programm bei 25 mit der Kontur/Inhaltcodierung fortgesetzt.

**Patentansprüche**

1. Verfahren zur Schätzung von Bewegung in einem aufgenommenen Bild (k-1), wobei jeweils für einen Block (MXN) des aufgenommenen Bildes (k-1) ein Bewegungsvektor (v) ermittelt wird, der die Bewegung innerhalb des Blocks (MXN) von einem zu einem folgenden Bild (k) darstellt, dadurch gekennzeichnet, daß zunächst erste Bewegungsvektoren (v) für jeweils einen Block (MXN) unabhängig voneinander ermittelt werden, daß die ermittelten ersten Bewegungsvektoren (v) unter Berücksichtigung einer Korrelation mit Bewegungsvektoren benachbarter Blöcke korrigiert werden und daß als Gütekriterium für die Bewegungsvektoren die Wahrscheinlichkeit dafür maximiert wird, daß der jeweils untersuchte Vektor (v) die physikalische Bewegung beschreibt.

2. Verfahren nach Anspruch 1, dadurch gekennzeichnet, daß die statistischen Abhängigkeiten zwischen den korrigierten Bewegungsvektoren durch die Gibbs-Verteilung gegeben sind.

3. Verfahren nach Anspruch 1, dadurch gekennzeichnet, daß die ersten Bewegungsvektoren ferner unter Berücksichtigung des Aufwandes einer anschließenden Codierung der korrigierten Bewegungsvektoren korrigiert werden.

4. Verfahren nach Anspruch 1, dadurch gekennzeichnet, daß bei der Korrektur der Bewegungsvektoren die Summe aus folgenden Summanden minimiert wird:

   (A) Produkt aus der Anzahl der Bildelemente eines Blocks und dem Logarithmus des Maximums von der Quadratsumme der Prädiktionsfehleramplituden und des Produkts aus der Anzahl der Bildelemente mit der Rauschleistung im zugeführten Signal,
   (B) Summe der Längen der Differenzvektoren zwischen den Bewegungsvektoren des betrachteten Blocks und den Bewegungsvektoren benachbarter Blöcke,
   (C) Anzahl der Bits, die für die Codierung des betrachteten Vektors notwendig ist.

5. Verfahren nach Anspruch 4, dadurch gekennzeichnet, daß die Minimierung für ein von den Bewegungsvektoren eines Bildes gebildetes Vektorfeld mehrmals angewandt wird.

6. Verfahren nach Anspruch 5, dadurch gekennzeichnet, daß die Summanden mit Faktoren bewertet werden, welche bei den wiederholten Durchführungen der Minimierung verändert werden.

7. Verfahren nach Anspruch 6, dadurch gekennzeichnet, daß ein Faktor zur Bewertung des Summanden (C) mit zunehmender Zahl der Durchgänge vergrößert wird.

8. Verfahren nach Anspruch 4, dadurch gekennzeichnet, daß bei den Summanden (B) die Längen und Größen, die sich auf zum betrachteten Block diagonal angeordnete benachbarte Blöcke beziehen, gegenüber den anderen benachbarten Blöcken mit einem Faktor $1/2^{1/2}$ bewertet werden.

9. Verfahren nach Anspruch 4, dadurch gekennzeichnet, daß die Minimierung für jeden Vektor nur für eine Auswahl bestimmter Kandidaten erfolgt, vorzugsweise für folgende Kandidaten:

   - den geschätzten Vektor des letzten Suchdurchgangs,
   - die vier davon nur um ½ Bildelement abweichenden Vektoren,
   - die Vektoren der acht benachbarten Blöcke,
   - die vier Vektoren, die nachfolgender Prädiktor zur Codierung der Vektoren prädizieren würde, wenn er in einer der vier Bildecken beginnen würde,
   - den Mittelwert der Vektoren der acht benachbarten Blöcke, wobei die Vektoren der diagonal benachbarten Blöcke mit $1/2^{1/2}$ bewertet werden.

10. Verfahren nach Anspruch 1, dadurch gekennzeichnet, daß bei der Korrektur der Bewegungsvektoren folgender

Ausdruck minimiert wird:

$$K \cdot \log(\text{Max}(\text{DFD}, \text{KP}_K)) + c \cdot \sum_{i=1}^{8} c_i \cdot |v - v_i|$$

$$+ d \cdot (k \cdot \sum_{i=1}^{8} (g_i \cdot \text{bin}(v, v_i)) + \sum_{i=1}^{5} K(v_i)),$$

wobei

- K die Anzahl der betrachteten Bildelemente,
- log den natürlichen Logarithmus,
- Max das Maximum,
- DFD die Quadratsumme des Prädiktionsfehlers im betrachteten Gebiet,
- $P_K$ die Rauschleistung des Systems, beispielsweise bedingt durch Kamerarauschen,
- c, d, k positive Konstanten,
- v, $v_i$ den betrachteten Bewegungsvektor bzw. einen Nachbarvektor von v,
- $c_i$ eine Konstante für Vierernachbarn und eine um den Faktor $1/2^{\frac{1}{2}}$ kleinere Konstante für diagonale Nachbarn,
- l l die Norm (Länge) eines Vektors,
- $g_i = 1$ für Vierernachbarn und $1/2^{\frac{1}{2}}$ für diagonale Nachbarn,
- bin $(v, v_i) = 1$, falls genau einer der Vektoren ein Nullvektor ist, und $= 0$ sonst,
- $K(v_i)$ die Länge des Codewortes zur Codierung des Vektors $v_i$

bezeichnen.

11. Verfahren nach Anspruch 1, dadurch gekennzeichnet, daß zur Codierung des blockorientierten Bewegungsvektorfeldes das Vektorfeld in Bereiche, die ausschließlich den Nullvektor enthalten und solche, die von Null verschiedene Vektoren enthalten, unterteilt wird, daß die Kontur der Bereiche, die den Nullvektor nicht enthalten, codiert wird und daß in Bereichen, die von Null verschiedene Vektoren enthalten, die Differenz zwischen dem ermittelten und einem aus den bereits codierten Bewegungsvektoren der räumlichen Nachbarschaft prädiziertem Bewegungsvektor übertragen wird.

12. Verfahren nach Anspruch 11, dadurch gekennzeichnet, daß der prädizierte Bewegungsvektor durch Mittelung von vier benachbarten Vektoren gebildet wird.

## Claims

1. Method for estimating movement in a recorded image (k-1), there being determined in each case for a block (MXN) of the recorded image (k-1) a movement vector (v) which represents the movement within the block (MXN) from one image to a following image (k), characterized in that initially first movement vectors (v) are determined independently of one another for one block (MXN) in each case, in that the first movement vectors (v) determined are corrected taking account of a correlation with movement vectors of neighbouring blocks, and in that the probability that the respectively investigated vector (v) describes the physical movement is maximized as quality criterion for the movement vectors.

2. Method according to Claim 1, characterized in that the statistical dependencies between the corrected movement vectors are given by the Gibbs distribution.

3. Method according to Claim 1, characterized in that the first movement vectors are further corrected taking account of the outlay on subsequent coding of the corrected movement vectors.

4. Method according to Claim 1, characterized in that when correcting the movement vectors the sum of the following summands is minimized:

(A) the product of the number of the pixels of a block and the logarithm of the maximum of the square of the sums of the prediction error amplitudes and of the product of the number of the pixels and the noise power in the signal fed,

(B) the sum of the lengths of the differential vectors between the movement vectors of the block under consideration and the movement vectors of neighbouring blocks, and

(C) the number of the bits which is required for coding the vector under consideration.

5. Method according to Claim 4, characterized in that the minimization is applied repeatedly for a vector field formed from the movement vectors of an image.

6. Method according to Claim 5, characterized in that the summands are evaluated using factors which are varied during the repeated executions of the minimization.

7. Method according to Claim 6, characterized in that a factor for evaluating the summand (C) is increased with an increasing number of passes.

8. Method according to Claim 4, characterized in that in the case of the summands (B) the lengths and magnitudes which relate to neighbouring blocks arranged diagonally relative to the block under consideration are evaluated using a factor of $1/2^{1/2}$ with respect to the other neighbouring blocks.

9. Method according to Claim 4, characterized in that the minimization is performed for each vector only for a selection of specific candidates, preferably for the following candidates:

-   the estimated vector of the last search pass,
-   the four vectors deviating therefrom by only $1/2$ a pixel,
-   the vectors of the eight neighbouring blocks,
-   the four vectors which the subsequent predictor would predict for coding the vectors if it were to start in one of the four image corners, and
-   the average value of the vectors of the eight neighbouring blocks, the vectors of the diagonally neighbouring blocks being evaluated using $1/2^{1/2}$.

10. Method according to Claim 1, characterized in that the following expression is minimized in correcting the movement vectors:

$$K \cdot \log(\text{Max}(\text{DFD}, \text{KP}_K)) + c \cdot \sum_{i=1}^{8} c_i \cdot |v - v_i|$$

$$+ d \cdot (k \cdot \sum_{i=1}^{8} (g_i \cdot \text{bin}(v, v_i)) + \sum_{i=1}^{5} K(v_i)),$$

it being the case that:

-   K denotes the number of pixels under consideration,
-   log denotes the natural logarithm,
-   Max denotes the maximum,
-   DFD denotes the sum of the squares of the prediction error in the area under consideration,
-   $P_K$ denotes the noise power of the system, for example caused by camera noise,
-   c, d, k denote positive constants,
-   $v, v_i$ denote the movement vector under consideration, or a neighbouring vector of v,
-   $c_i$ denotes a constant for quad neighbours and a constant for diagonal neighbours which is smaller by the factor of $1/2^{1/2}$,
-   | | denotes the norm (length) of a vector,
-   $g_i = 1$ for quad neighbours and $1/2^{1/2}$ for diagonal neighbours,
-   bin $(v, v_i) = 1$ if precisely one of the vectors is a null vector, and $= 0$ otherwise, and
-   $K(v_i)$ denotes the length of the code word for coding the vector $v_i$.

11. Method according to Claim 1, characterized in that, in order to code the block-orientated movement vector field, the vector field is subdivided into regions which exclusively contain the null vector and those which contain vectors different from zero, in that the contour of the regions which do not contain the null vector is coded, and in that in regions which contain vectors different from zero the difference between the movement vector determined and a movement vector predicted from the already coded movement vectors of the spatial neighbourhood is transmitted.

12. Method according to Claim 11, characterized in that the predicted movement vector is formed by averaging four neighbouring vectors.

**Revendications**

1. Procédé d'évaluation du mouvement dans une image de prise de vue (k-1), selon lequel pour un bloc (MXN) de l'image de prise de vue (k-1) on détermine un vecteur de mouvement (v) qui représente le mouvement dans le bloc (MXN) par rapport à une image suivante (k),
   caractérisé en ce qu'

   - on détermine tout d'abord les premiers vecteurs de mouvement (v) pour chaque fois un bloc (MXN) indépendamment les uns des autres,
   - on corrige les premiers vecteurs de mouvement (v) déterminés en tenant compte d'une corrélation avec les blocs voisins des vecteurs de mouvement et,
   - comme critère de qualité des vecteurs de mouvement, on maximise la probabilité que le vecteur (v), examiné décrit le mouvement physique.

2. Procédé selon la revendication 1,
   caractérisé en ce que
   la dépendance statistique entre les vecteurs de mouvement corrigés est donnée par la distribution de Gibbs.

3. Procédé selon la revendication 1,
   caractérisé en ce que
   les premiers vecteurs de mouvement sont en outre corrigés en tenant compte de l'importance d'un codage consécutif des vecteurs de mouvement corrigés.

4. Procédé selon la revendication 1,
   caractérisé en ce qu'
   à la correction des vecteurs de mouvement, on minimise la somme des termes d'addition suivants :

   (A) le produit du nombre des éléments-image d'un bloc et le logarithme du maximum de la somme au carré des amplitudes d'erreur de prédiction et du produit du nombre des éléments-image avec la puissance de bruit du signal fourni,
   (B) la somme des longueurs des vecteurs de différence entre les vecteurs de mouvement du bloc considéré et les vecteurs de mouvement des blocs voisins,
   (C) le nombre des bits nécessaires pour le codage du vecteur considéré.

5. Procédé selon la revendication 4,
   caractérisé en ce qu'
   on applique la minimisation plusieurs fois à un champ vectoriel formé par les vecteurs de mouvement d'une image.

6. Procédé selon la revendication 5,
   caractérisé en ce que
   les termes de la somme sont pondérés par des coefficients qui sont modifiés lors du passage répété de l'opération minimum.

7. Procédé selon la revendication 6,
   caractérisé en ce qu'
   on augmente un coefficient pour pondérer les termes de somme (C) avec le nombre croissant de passages.

8. Procédé selon la revendication 4,

caractérisé en ce que
pour les termes de la somme (B), on pondère les longueurs et les grandeurs qui se rapportent aux blocs voisins en diagonale du bloc considéré, par rapport aux autres blocs voisins selon un coefficient $1/2^{1/2}$.

9. Procédé selon la revendication 4,
caractérisé en ce qu'
on minimise pour chaque vecteur seulement les candidats déterminés pour une sélection de préférence pour les candidats suivants :

- le vecteur évalué du dernier passage de recherche,
- les quatre vecteurs qui en dérivent d'un ½ élément-image seulement,
- les vecteurs des huit blocs voisins,
- les quatre vecteurs que le prédicteur suivant prédirait pour le codage des vecteurs si l'on commençait à l'un des quatre coins de l'image,
- la valeur moyenne des vecteurs des huit blocs voisins, les vecteurs de blocs voisins en diagonale étant pondérés par le coefficient $1/2^{1/2}$.

10. Procédé selon la revendication 1,
caractérisé en ce que
pour la correction des vecteurs de mouvement, on minimise l'expression suivante:

$$ K \bullet \log(Max(DFD, KP_K)) + c \bullet \sum_{i=1}^{8} c_i \bullet |v - v_i| $$

$$ + d \bullet (k \bullet \sum_{i=1}^{8} (g_i \bullet bin(v, v_i)) + \sum_{i=1}^{5} K(v_i)), $$

dans laquelle,

- K représente le nombre d'éléments-image considérés,
- log représente le logarithme naturel,
- Max représente le maximum,
- DFD représente la somme des carrés de l'erreur de prédiction dans le domaine considéré,
- $P_K$ représente la puissance du bruit du système engendré par exemple par les bruits de la caméra,
- c, d, k représentent des constantes positives,
- v, $v_i$ représentent le vecteur de mouvement considéré ou un vecteur voisin de v,
- $c_i$ représente une constante quatre voisins et une constante diminuée du coefficient $1/2^{1/2}$ pour les voisins en diagonale,
- l l représente la norme (longueur) d'un vecteur
- $g_i = 1$ pour les quatre voisins ; et $1/2^{1/2}$ pour les voisins en diagonale,
- bin (v, $v_i$) = 1 dans le cas où l'un des vecteurs est exactement le vecteur nul ; au cas contraire, on a = 0,
- $K(v_i)$ égal à la longueur du code pour coder le vecteur $v_i$.

11. Procédé selon la revendication 1,
caractérisé en ce que
pour coder le champ des vecteurs de mouvement à orientation par blocs, on subdivise le champ vectoriel en zones qui contiennent exclusivement le vecteur nul et en zones contenant des vecteurs différents du vecteur nul, on code le contour des zones qui ne contiennent pas le vecteur nul et en ce que dans les zones qui contiennent des vecteurs différents du vecteur nul, on transmet la différence entre le vecteur de mouvement, déterminé et un vecteur de mouvement, voisin dans l'espace, prédit, à partir des vecteurs de mouvement déjà codés.

12. Procédé selon la revendication 11,
caractérisé en ce qu'

**EP 0 477 616 B1**

on forme le vecteur de mouvement prédit en formant la moyenne de quatre vecteurs voisins.

Fig. 1

| | | 1 | | | | 2 | | | | 3 |
|---|---|---|---|---|---|---|---|---|---|---|

Bewegungsschätzung
1 Bewegungsvektor pro
Block

3 Iterationen mit
wachsendem d

DFD/Gibbs
Bewegungsschätzung

Kontur / Inhalt
Codierung

Vektorfeld

Vektorfeld

Code

Fig. 1

Coder

Fig. 2

Fig. 3 a

$$MAD\,(i,j) = \frac{1}{NM} \cdot \sum_{m=1}^{M} \sum_{n=1}^{N} \left| s^K(m,n) - s^{K-1}(m+i,n+j) \right|$$

Fig. 3 b

$N = 16$
$dm = 12$
$S1 = 6$
$S2 = 3$
$S3 = 2$
$S4 = 1$

Fig. 3 c

14

$$p(A, BIV) \propto \prod_{i=1}^{N} \frac{1}{\sqrt{2\pi\sigma^2}} exp(-\frac{d^2(i, v(i))}{2\sigma^2}) \qquad (4)$$

$$\sigma^2 \approx Max(\frac{1}{N}\sum_{i=1}^{N} d^2(i, v(i)), P_K) \qquad (5)$$

$$p(A, BIV) \propto \frac{1}{\sqrt{2\pi\sigma^2(V)}^N} \qquad (6)$$

$$p(V) \propto exp(-\sum_{i=1}^{M} C_i) \qquad (7)$$

$$L_K = k \cdot \sum_{i=1}^{8} g_i \cdot bin(v, v_i) \qquad (11)$$

$$L_P = \sum_{i=1}^{5} K(v_i) \qquad (12)$$

$$N \cdot log(Max(DFD, NP_K)) + a\sum_{i=1}^{M} C_i + b\sum(k \cdot \sum_{i=1}^{8}(g_i \cdot bin(v, v_i)) + \sum_{i=1}^{5} K(v_i)) \longrightarrow Min \qquad (14)$$

$$K \cdot log(Max(DFD, KP_K)) + c\sum_{i=1}^{8} c_i \cdot \|v - v_i\| + d \cdot (k \cdot \sum_{i=1}^{8}(g_i \cdot bin(v, v_i)) + \sum_{i=1}^{5} K(v_i)) \longrightarrow Min \qquad (15)$$

Fig. 4

EP 0 477 616 B1

j=1 Erster Durchlauf — 11

B(x,y) = erster Block, c=c(j), d=d(j) — 12

z = 1, $Q_{Min}$ = unendlich — 13

Naechsten Vektorkandidat ermitteln
V = Vektorkandidat(z) — 14

$$L = k \cdot \sum_{i=1}^{8} g_i \, bin(v, v_i) + \sum_{i=1}^{5} K(v_i)$$ — 15

$$Q = K \cdot \log[Max(DFD, K\,P_K)] + c \cdot \sum_{i=1}^{8} c_i \, \|v - v_i\| + d\,L$$ — 16

j=j+1 — 24

17 — $Q < Q_{MIN}$ ? — Ja — $Q_{MIN} = Q$, $V_{OPT} = V$ — 18

Nein

20 — z = z+1 — Ja — z < 18 ? — 19

Nein

21 — Sind alle Bloecke bearbeitet ? — Nein — Naechsten Block B(x,y) bearbeiten — 22

Ja

Nein — $j \geq j_{MAX}$ ? — 23

Ja

Kontour/Inhalt-Codierung — 25

**Fig. 5**